# EUROPEAN PATENT APPLICATION

(11) **EP 4 851 500 A1**
(43) Date of publication of application: **09.12.2026**
(21) Application number: 26178138.9
(22) Date of filing: 12.05.2026
(51) Int. Cl.: F16H 61/04, F16H 63/50, F16H 59/38, F16H 59/46

(54) **METHOD, APPARATUS, CONTROLLER, VEHICLE, AND PRODUCT FOR SHIFTING GEARS IN A VEHICLE**

(30) Priority: 03.06.2025 CN 202510737123
(71) Applicant: Robert Bosch GmbH, 70442 Stuttgart (DE)
(72) Inventor: ZHANG, Hantian, Wuxi, Jiangsu, 214000 (CN)

(57) **Abstract**

Embodiments of the present disclosure related to a method, an apparatus, a controller, a vehicle, and a product for shifting gears in a vehicle. The method comprises determining whether a target gear shifting scenario associated with the speed difference between the bushing and the ring gear has occurred based on the speeds of the vehicle's ring gear and bushing and the position of the shift fork. The method further comprises, in response to determining that a target gear shifting scenario has occurred, instructing the main drive motor to control the speed of the bushing so that the speed difference reaches a predetermined value. The method further comprises stopping the bushing-based speed difference control based on the position change of the shift fork after the speed difference reaches a predetermined value. In this way, a more comprehensive and effective countermeasure is provided for the target gear shifting scenario.

## Description

### Technical Field

Embodiments of the present disclosure generally relate to the field of driving, and in particular to methods, apparatuses, controllers, vehicles, and products for shifting gears in a vehicle.

### Background Art

With the booming development of the automotive industry, the driving experience of vehicles has significantly improved due to the coordinated development of cutting-edge fields such as intelligentization and electrification. However, despite these good developments, some limitations are still exposed when dealing with complex scenarios, and there is room for improvement.

### Summary of the Invention

Embodiments of the present disclosure provide a method, an apparatus, a controller, a vehicle, and a product for shifting gears in a vehicle.

According to a first aspect of the present disclosure, a method for shifting gears in a vehicle is provided. The method comprises determining whether a target gear shifting scenario associated with the speed difference between the bushing and the ring gear has occurred based on the speeds of the vehicle's ring gear and bushing and the position of the shift fork. The method further comprises, in response to determining that a target gear shifting scenario has occurred, instructing the main drive motor to control the speed of the bushing so that the speed difference reaches a predetermined value. The method further comprises stopping the bushing-based speed difference control based on the position change of the shift fork after the speed difference reaches a predetermined value.

According to a second aspect of the present disclosure, an apparatus for shifting gears in a vehicle is provided. The apparatus comprises a target gear shifting scenario determination module, configured to determine whether a target gear shifting scenario associated with the speed difference between the bushing and the ring gear has occurred based on the speeds of the vehicle's ring gear and bushing and the position of the shift fork. The apparatus further comprises a motor indication module configured to, in response to determining that a target gear shifting scenario has occurred, instruct the main drive motor to control the speed of the bushing so that the speed difference reaches a predetermined value. The motor indication module is further configured to stop the bushing-based speed difference control based on the position change of the shift fork after the speed difference reaches a predetermined value.

According to a third aspect of the present disclosure, a controller is provided. The controller comprises at least one processor. The controller further comprises a memory coupled to the at least one processor and having instructions stored thereon that, when executed by the at least one processor, cause a device to execute the steps of the method according to the first aspect of the present disclosure.

According to a fourth aspect of the present disclosure, a vehicle is provided. The vehicle comprises the controller according to the third aspect of the present disclosure.

A fifth aspect of the present disclosure provides a computer program product, which is tangibly stored on a computer-readable medium and comprises computer-executable instructions that, when executed by a processor of a computer, cause the computer to execute the steps of the method according to the first aspect of the present disclosure.

### Brief Description of the Drawings

The above-described and other purposes, features, and advantages of the present disclosure will become clearer by more detailed description of the exemplary embodiments of the present disclosure in conjunction with the accompanying drawings. In illustrative embodiments of the present disclosure, the same or similar reference numerals generally represent the same or similar parts, components, etc.
Fig. 1A illustrates a schematic diagram of an example environment in which the method and/or device according to embodiments of the present disclosure may be implemented;
Fig. 1B illustrates an example of a bushing and a ring gear;
Fig. 2 illustrates a flow chart of a method for shifting gears in a vehicle according to embodiments of the present disclosure;
Fig. 3 illustrates a diagram of an example process of shifting gears in a transmission according to embodiments of the present disclosure;
Fig. 4 illustrates an example flow of a process for determining a gear shifting degradation scenario according to embodiments of the present disclosure;
Fig. 5 illustrates a diagram of an example process of gear shifting according to embodiments of the present disclosure;
Fig. 6 illustrates a diagram of a process of changing the position of the shift fork according to embodiments of the present disclosure;
Fig. 7 illustrates a diagram of a process of changing the bushing speed and ring gear speed according to embodiments of the present disclosure;
Fig. 8 illustrates an example of an optimization process for speed difference control according to embodiments of the present disclosure;
Fig. 9 shows a schematic diagram of an apparatus for shifting gears in a vehicle according to embodiments of the present disclosure; and
Fig. 10 illustrates a schematic block diagram of an example device suitable for implementing embodiments of the present disclosure.

In the various accompanying drawings, the same or corresponding numbers represent the same or corresponding portions.

### Detailed Description of the Embodiments

The examples of the present disclosure will be described in further detail below with reference to the accompanying drawings. While certain examples of the present disclosure are illustrated in the accompanying drawings, it should be understood that the present disclosure may be implemented in various forms and should not be construed as being limited to the examples set forth herein. Rather, these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and its variations should be understood as open-ended inclusion; that is, "comprising but not limited to." The term "based on" should be understood as "at least partially based on." The term "one example" or "this example" should be understood as "at least one example." The term "first," "second," etc. may refer to different or the same objects unless expressly indicated otherwise.

In the field of vehicle transmissions, the gear shifting process may be mainly divided into five sub-processes. That is, torque reduction, gear disengagement, speed synchronization, gear shifting, and torque increase. Before shifting gears, the motor speed is controlled to reach the set speed through a speed synchronization sub-process, thereby achieving the target speed difference. By way of example and not limitation, the speed difference between the vehicle's bushing and ring gear can be controlled to 15 rpm before shifting gears, wherein the speed of the bushing can be greater than the speed of the ring gear.

Gear shifting can be divided into reverse gear engagement (collision) and forward gear engagement (collision). Reverse gear engagement can be achieved by the lower half of the bushing teeth colliding with the upper half of the ring gear teeth. If the speed of the bushing is greater than that of the ring gear, reverse gear engagement will not easily facilitate gear shifting. Forward gear engagement can be achieved by the upper half of the bushing teeth colliding with the lower half of the ring gear teeth. When the speed of the bushing can exceed that of the ring gear, forward gear engagement easily facilitates gear shifting.

When shifting gears, due to the presence of a suitable speed difference, the bushing teeth and the ring gear teeth will complete interlocking and engagement, thereby completing the gear shift. However, due to the presence of a single impact and/or friction, there is a small probability that the speed difference will deteriorate to near zero or be completely wiped out in the case of reverse gear engagement. In such a gear shifting degradation scenario, shifting gears will become difficult because the bushing and ring gear may rotate at the same or similar speeds.

In some related solutions, the bushing can be switched to neutral, and the speed can be readjusted and the gear re-engaged. In other words, the countermeasure in the related solution is probabilistic. That is, after failing to shift gears, it goes back and tries shifting gears again until it succeeds. Such an operation significantly increases the time required to shift gears. In some evaluations, when the above-described gear shifting degradation scenario occurs, the time the retry solution takes to shift gears may be twice as long as the average gear shifting time. In addition, repeat gear shifting may increase wear on bushings, ring gears, etc.

To address at least the above and other potential problems, the embodiments of the present disclosure provide a solution for shifting gears in a vehicle. The solution for shifting gears in a vehicle according to embodiments of the present disclosure comprises determining whether a target gear shifting scenario associated with the speed difference between the bushing and the ring gear has occurred based on the speeds of the vehicle's ring gear and bushing and the position of the shift fork. The solution further comprises, in response to determining that a target gear shifting scenario has occurred, instructing the main drive motor to control the speed of the bushing so that the speed difference reaches a predetermined value. The solution further comprises stopping the bushing-based speed difference control based on the position change of the shift fork after the speed difference reaches a predetermined value.

In this way, a more comprehensive and effective countermeasure is provided for the target gear shifting scenario. By controlling the speed difference based on the bushing, the gear shifting time is significantly shortened and the gear shifting success rate is improved. It also greatly reduces the wear of the transmission and extends the service life of the transmission, providing a strong guarantee for the efficiency and reliability of vehicle gear shifting.

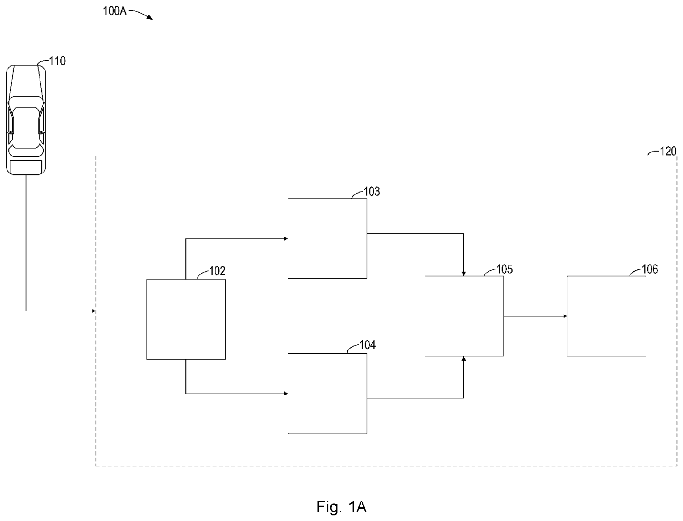

The basic principles and several example implementations of the present disclosure are described below with reference to fig. 1A to fig. 10. It should be understood that these exemplary embodiments are given only to enable those skilled in the art to better understand and thereby achieve the embodiments of the present disclosure and not to limit the scope of the present disclosure in any way.

Fig. 1A illustrates a schematic diagram of an example environment 100A in which the method and/or process according to embodiments of the present disclosure may be implemented. As shown in fig. 1A, an example environment 100A may comprise a vehicle 110, where block 120 shows that the vehicle 110 may comprise a transmission control unit (TCU) 102, a shift motor 103, a main drive motor 104, a bushing 105, and a ring gear 106, which may be communicatively coupled to each other. For example, the TCU may send commands and requests to the main drive motor 104 to further control the bushing speed of the bushing 105 by controlling the motor speed of the main drive motor 104, or the TCU may send commands and requests to the shift motor 103 such that the shift motor 103 controls movement of the shift fork to further drive the bushing 105 to move, thereby promoting engagement between the bushing 105 and the ring gear 106. It should be understood that limited components are shown in the example environment 100A for implementing the embodiments of the present disclosure for the purpose of ease of understanding and illustration only, and the embodiments of the present disclosure are not so limited.

As shown in fig. 1A, the vehicle 110 is illustrated as a car. However, it should be understood that the following will be described using electric vehicles as a non-limiting example, and other types of vehicles are also feasible. It should be understood that for purposes of ease of illustration and comprehension, only a limited number of controllers is shown in fig. 1A, but the vehicle 110 may comprise more and different controllers.

Sensors, such as rotational speed sensors, shift fork position sensors, etc., may be configured within an electric drive axle, and signals from these sensors may be transmitted to the TCU 102 via corresponding signal lines or wire harnesses. By way of example and not limitation, the TCU 102 may be coupled to a rotational speed sensor for the ring gear and bushing of the vehicle 110, and the TCU 102 may also be coupled to a shift fork position sensor for the shift fork of the vehicle 110. During gear shifting, the TCU 102 may acquire sensing signals and data from the rotational speed sensor and the shift fork position sensor and utilize the acquired sensing data to perform decision-making for vehicle gear shifting. As noted above, the sensing data from the in-vehicle multi-source sensor system can assist the controller on the vehicle 110 in achieving effective control. These sensors, along with the sensor data sensed thereby, will be described in further detail below.

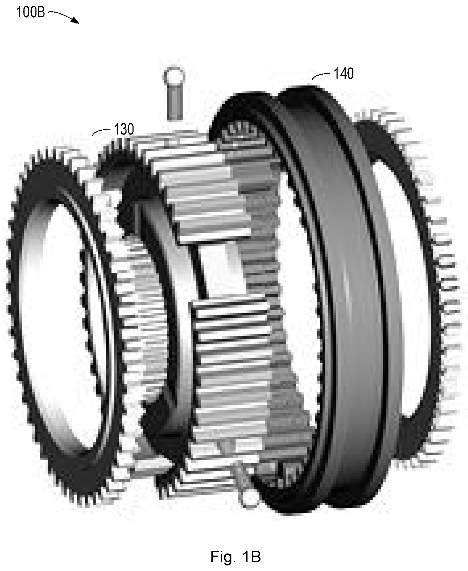

Fig. 1B illustrates an example 100B of a bushing and a ring gear. As shown in fig. 1B, a transmission of a vehicle (e.g., vehicle 110 of fig. 1A) may comprise a ring gear 130 and a bushing 140. The ring gear 130 may comprise ring gear teeth on its outer side, and the bushing 140 may comprise bushing teeth on its inner side. The engagement between the ring gear teeth and the bushing teeth can result in transmission coupling between the ring gear 130 and the bushing 140. In this way, both the ring gear 130 and the bushing 140 can work together in the transmission to deliver power and enable gear shifting.

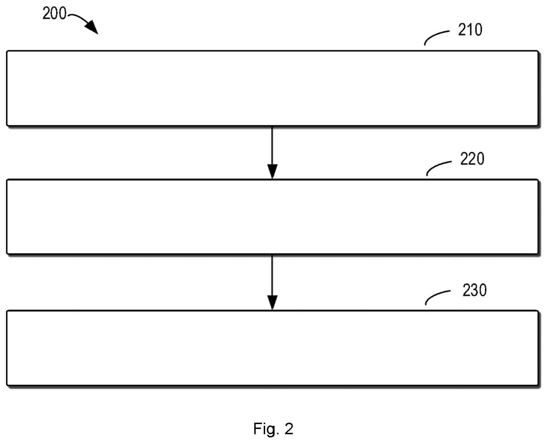

An example environment 100A in which the method and/or process according to embodiments of the present disclosure can be implemented and an example 100B of a bushing and a ring gear are described above in connection with fig. 1A and fig. 1B. A flow chart of a method 200 for shifting gears in a vehicle according to embodiments of the present disclosure is described below in conjunction with fig. 2. With this method 200, this improved strategy can effectively address gear shifting degradation scenarios, significantly shortening gear shifting time and increasing the success rate while also reducing transmission wear.

Fig. 2 illustrates a flow chart of a method 200 for shifting gears in a vehicle according to embodiments of the present disclosure. At block 210, it is determined whether a target gear shifting scenario associated with the speed difference between the bushing and the ring gear has occurred based on the speeds of the vehicle's ring gear and bushing and the position of the shift fork. As noted above, in the case of reverse gear engagement, non-ideal conditions may occur related to the speed difference between the bushing and the ring gear, such as deterioration of the speed difference. Reverse gear engagement already makes it difficult to shift gears. If the speed difference is further aggravated, shifting gears will become even more difficult.

By way of example and not limitation, a relatively fast bushing may collide with a relatively slow ring gear in reverse (i.e., the lower half of the bushing teeth collides with the upper half of the ring gear teeth). The impact and/or friction caused by the collision may cause a bushing that was originally faster to be slowed down while causing a ring gear that was originally slower to speed up. This results in an undesirable speed difference approaching or disappearing to zero. That is, the ring gear and the bushing move relatively stationary or nearly relatively stationary.

According to embodiments of the present disclosure, based on sensing data from sensors on the vehicle (e.g., rotational speed sensors for the ring gear and the bushing and a shift fork position sensor for the shift fork), it is determined whether a gear shifting scenario (i.e., a target gear shifting scenario) that may affect gear shifting is associated with the speed difference between the bushing and the ring gear. If such a gear shifting scenario occurs, timely response and intervention are required.

At block 220, in response to determining that a target gear shifting scenario has occurred, the main drive motor is instructed to control the speed of the bushing so that the speed difference reaches a predetermined value. The TCU may transmit commands or requests to the main drive motor to affect the bushing speed by controlling the motor speed of the main drive motor. The motor speed of the main drive motor may reach a target motor speed based on a request from the TCU, thereby further causing the speed of the bushing to reach the desired target bushing speed.

According to embodiments of the present disclosure, the speed of the bushing is changed by controlling the motor speed of the main drive motor. When the speed difference between the bushing and the ring gear does not meet the gear shifting requirements, for example, when the speed difference is small or zero, the main drive motor is controlled to further influence the bushing so that, for example, the speed of the bushing changes, thereby making the speed difference reach a predetermined value.

At block 230, the bushing-based speed difference control is stopped based on the position change of the shift fork after the speed difference reaches a predetermined value. According to embodiments of the present disclosure, the position of the shift fork may be monitored after a speed difference of a predetermined value is obtained. If the change in the position of the shift fork meets certain conditions, the bushing-based speed difference control is stopped.

The method for shifting gears in a vehicle according to embodiments of the present disclosure provides a more comprehensive and effective solution for the target gear shifting scenario. By controlling the speed difference based on the bushing, the gear shifting time can be significantly shortened and the gear shifting success rate can be improved. It can also greatly reduce the wear of the transmission and extend the service life of the transmission, providing a strong guarantee for the efficiency and reliability of vehicle gear shifting.

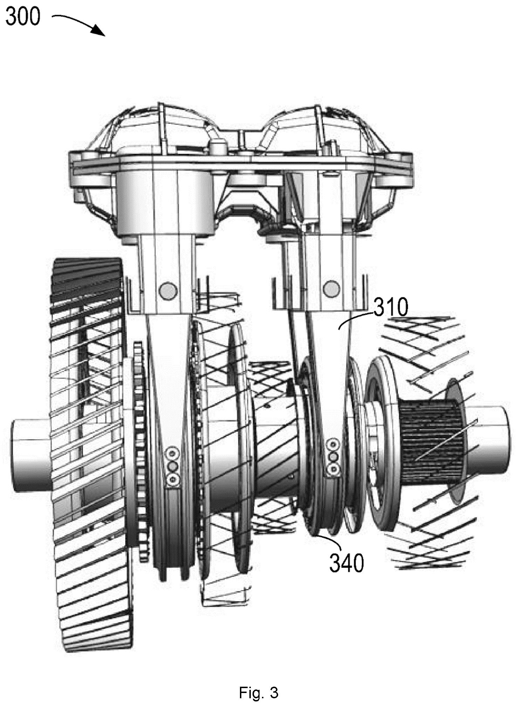

Fig. 3 illustrates a diagram of an example process 300 of shifting gears in a transmission according to embodiments of the present disclosure. As shown in fig. 3, the shift fork 310 may be fork-shaped and configured for gear shifting. The shift fork 310 may be configured with a shift motor to drive movement of the bushing by controlling movement of the shift fork, facilitating interaction (e.g., engagement) between the bushing and the ring gear.

The position of the shift fork 310 is associated with the speed difference control based on the bushing 340 according to embodiments of the present disclosure. When the position of the shift fork 310 is within the distance threshold range, this may indicate that the speed difference between the bushing and the ring gear does not satisfy the gear shifting requirements and, after determining a gear shifting degradation scenario, speed difference control based on the bushing 340 is required. Further, the speed difference control based on the bushing 340 may be stopped when the position of the shift fork 310 exceeds the distance threshold range.

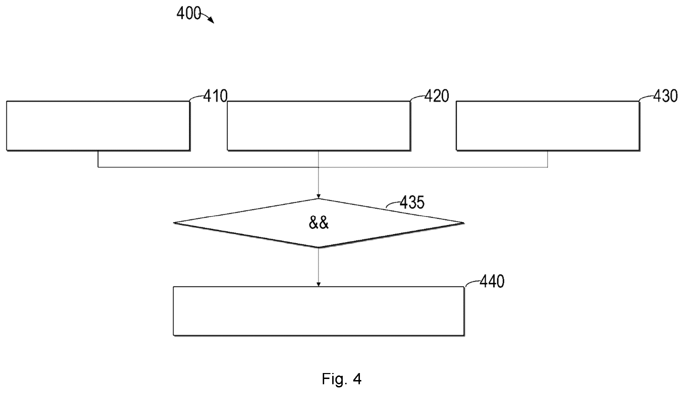

Fig. 4 illustrates an example flow of a process 400 for determining a gear shifting degradation scenario according to embodiments of the present disclosure. According to embodiments of the present disclosure, the target gear shifting scenario associated with the speed difference between the bushing and the ring gear may comprise a gear shifting degradation scenario where the speed difference does not meet the gear shifting requirements. For example, the speed difference between the bushing and the ring gear tends to zero or equals zero under the influence of reverse gear collision. According to embodiments of the present disclosure, when it is determined that the following conditions are simultaneously met and maintained for a predetermined period of time, such a target gear shifting scenario or gear shifting degradation scenario may be determined to have occurred. These conditions comprise: the speed difference is less than a speed threshold; the position of the shift fork is within a distance threshold range; and the rate of change of the shift fork position is less than a rate of change threshold. These will be described in detail below in conjunction with fig. 4.

In some embodiments, at 410, based on the speed sensing data from the rotational speed sensor, it may be determined whether the difference between the speed of the bushing and the speed of the ring gear is less than a speed threshold. In other words, in a gear shifting degradation scenario where the speed difference between the bushing and the ring gear does not meet the gear shifting requirements, in addition to the fact that the speed difference being zero is undesirable, an unacceptably small speed difference will also lead to undesirable degradation. In some embodiments, the speed sensing data may be sensed by a rotational speed sensor dedicated to the bushing and a rotational speed sensor dedicated to the ring gear, or the speed sending data may be sensed uniformly by the same rotational speed sensor. By way of example and not limitation, the speed threshold may be 10 rpm.

In some embodiments, at 420, based on the shift fork position sensing data from the shift fork position sensor, it may be determined whether the position of the shift fork is within a distance threshold range. By way of example and not limitation, it may be determined whether the position of the shift fork is within the tooth tip range (e.g., the 2 mm-4 mm range). In addition, in some embodiments, at 430, based on the shift fork position sensing data from the shift fork position sensor, it may be determined whether the shift fork position change rate is less than a change rate threshold. By way of example and not limitation, it may be determined whether the shift fork position change is sluggish, for example, whether the change in the shift fork position per 10 ms is less than 0.2 mm. When the above conditions are satisfied simultaneously, it is also necessary to observe whether they can be maintained simultaneously for a predetermined time (e.g., 30 ms). At 435, if the above conditions are satisfied simultaneously (i.e., "yes" at 410, 420, and 430) and maintained for a predetermined time, then at 440, a gear shifting degradation scenario may be determined to have occurred where the speed difference between the bushing and the ring gear does not satisfy the gear shifting requirements. It should be understood that the numerical values in the specific examples above are not limiting, and other different instances can be used in actual applications according to specific needs.

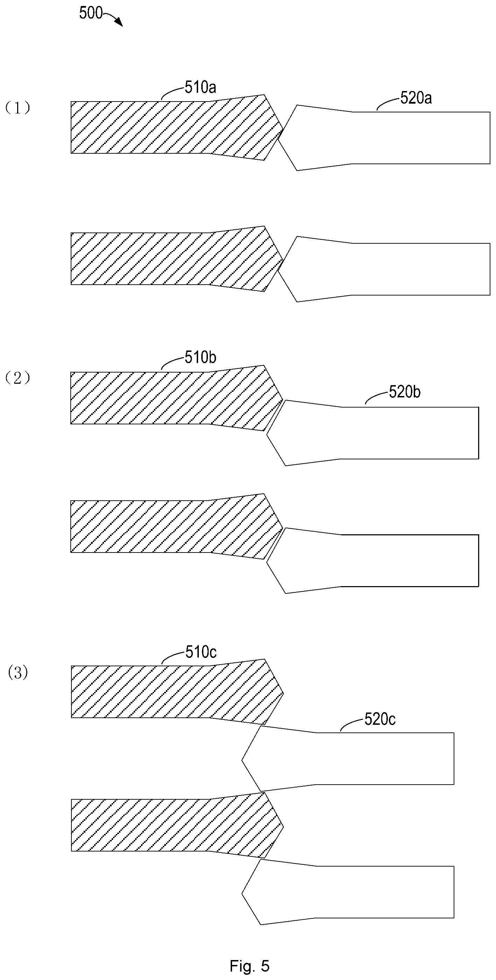

Fig. 5 illustrates a diagram of an example process 500 of gear shifting according to embodiments of the present disclosure. In fig. 5, the left side indicates the bushing side (shown as shaded in fig. 5) and the right side indicates the ring gear side (shown as unshaded in fig. 5). Section (1) of fig. 5 illustrates a degradation case of reverse gear engagement. In section (1), the lower half of the bushing teeth 510a of the relatively fast bushing may collide with the upper half of the ring gear teeth 520a of the relatively slow ring gear in reverse. At this point, there is a possibility that the speed difference may deteriorate to near zero (e.g., remain at a low speed difference) or become completely zero, which is an undesirable state.

According to embodiments of the present disclosure, in order to address the problem of deteriorating speed difference, a command or request is issued to control the motor speed of the main drive motor and thereby control the bushing speed of the bushing so as to form a new speed difference between the bushing and the ring gear starting from the bushing side. In some embodiments, a first request to enable the motor speed control mode may be transmitted by the TCU to the main drive motor. At the same time, a second request to indicate the motor speed may be transmitted by the TCU to the main drive motor to reduce the speed of the bushing to a target speed that is lower than the speed of the ring gear by causing the main drive motor to reach the motor speed in the motor speed control mode. In gear shifting degradation scenarios involving reverse gear engagement, the bushing speed is equal to or similar to the ring gear speed (the bushing may be slightly faster than the ring gear). Section (2) of fig. 5 illustrates the reversal of the speed difference according to embodiments of the present disclosure. By sending the above request to the main drive motor to instruct the main drive motor to control the speed of the bushing, the speed of the bushing may be reduced to a predefined speed or a speed dynamically determined in the driving environment to achieve intervention, wherein the reduced bushing speed is lower than the ring gear speed. In section (2), the speed of the bushing teeth 510b is lower than that of the ring gear teeth 520b. When the ring gear speed does not change substantially or changes according to the previous trend, the decrease in the bushing speed can form a new speed difference between the two, thereby facilitating successful gear shifting. Section (3) of fig. 5 illustrates the engagement of the bushing with the ring gear, thus successfully shifting gears. In section (3), the bushing teeth 510c and the ring gear teeth 520c are successfully engaged.

As noted above, when shifting gears, by sending a command or request to the main drive motor, the main drive motor can be controlled, which in turn controls the bushing, causing the bushing's speed to decrease and thereby ending the relative or nearly relative stillness between the bushing and the ring gear. In some embodiments, by reducing the speed of the bushing to the target speed, the speed difference between the bushing and the ring gear when shifting gears (also referred to as the first speed difference for ease of reference) can be made the opposite of the speed difference between the bushing and the ring gear before shifting gears (also referred to as the second speed difference for ease of reference). In other words, if, after a certain delay, it is determined that a gear shifting degradation scenario where the speed difference between the bushing and the ring gear does not meet the gear shifting requirements has currently occurred, the speed difference can be immediately reversed. By way of example and not limitation, assuming a speed difference of 15 rpm (i.e., the second speed difference) before gear shifting, the bushing-based speed difference control is immediately activated to reduce the speed of the bushing so that the speed difference when shifting (i.e., the first speed difference) is controlled to -15 rpm. In this way, the speed difference is precisely controlled to be the opposite of the value before shifting gears, which allows for a more reasonable speed match between the bushing and the ring gear when shifting gears, making the gear shifting process smoother.

As described above, bushing-based speed difference control (i.e., speed difference reversal control) is described in accordance with embodiments of the present disclosure. After enabling bushing-based speed difference control, the position of the shift fork can be monitored in real time, thereby enabling dynamic adjustment of gear shifting. In some embodiments, it may be determined whether the position of the shift fork is greater than a distance threshold. If the position of the shift fork is determined to be greater than the distance threshold, speed difference control is exited and zero torque is requested in the motor torque operating mode used to control the motor torque. According to embodiments of the present disclosure, a third request to enable the motor torque operating mode may be transmitted by the TCU to the main drive motor and a fourth request to request zero torque may be transmitted simultaneously by the TCU to the main drive motor. It will be understood that the aforementioned motor speed control mode and motor torque operating mode are two operating modes of the main drive motor. The operating mode of the main drive motor may be switched based on TCU commands.

By way of example and not limitation, when monitoring the position of the shift fork in real time, after the position of the shift fork exceeds the tooth tip range (e.g., greater than 4 mm), the speed difference (reverse) control may be exited and the motor torque operating mode may be entered again to request zero torque.

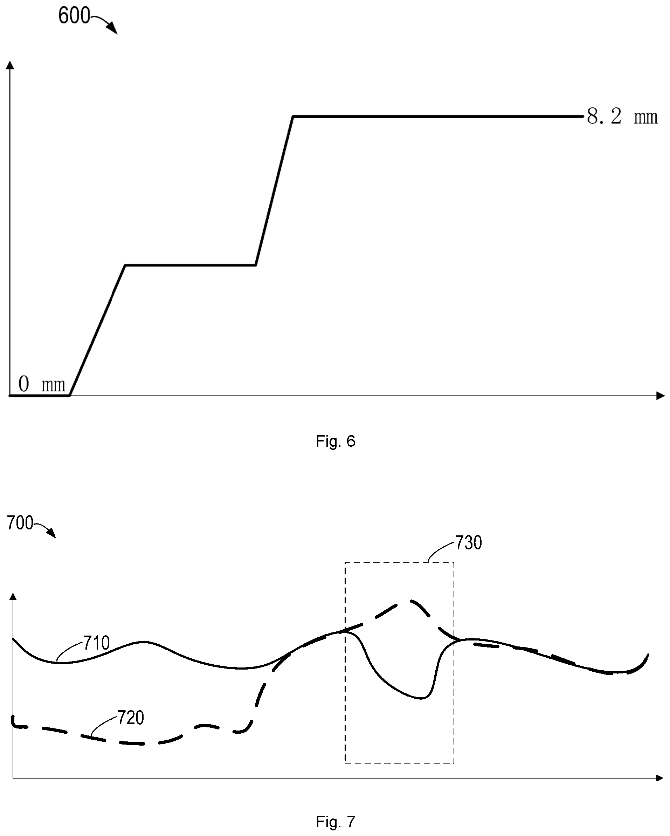

Fig. 6 illustrates a diagram of a process 600 of changing the position of the shift fork according to embodiments of the present disclosure. As shown in fig. 6, the horizontal axis may indicate time progression and the vertical axis may indicate changes in the position of the shift fork. At the beginning of gear shifting, the position of the shift fork may be 0 mm. During gear shifting, the shift fork moves a certain distance, which may last for a period of time (e.g., 0.33 s). After gear shifting, the shift fork remains at another farther position, for example, 8.2 mm as exemplarily shown in fig. 6. It should be understood that the purpose of showing fig. 6 is to schematically illustrate the changing trend in the shift fork position, so some outliers are not shown therein.

Fig. 7 illustrates a diagram of a process 700 of changing the bushing speed and ring gear speed according to embodiments of the present disclosure; In fig. 7, the horizontal axis may indicate time progression and the vertical axis may indicate the speeds of the bushing and the ring gear. As shown in fig. 7, at the beginning of gear shifting, the bushing speed 710 may be greater than the ring gear speed 720. During gear shifting, if a gear shifting degradation scenario occurs in which the speed difference between the bushing and the ring gear tends toward zero or equals zero, according to embodiments of the present disclosure, the bushing speed 710 may be reduced by intervening in the speed measured at the bushing, thereby causing the desired speed difference between the bushing and the ring gear. As shown in the dashed box 730 in fig. 7, the bushing speed 710 may become lower than the ring gear speed 720. After gear shifting, the bushing engages the ring gear, so that the bushing speed 710 can be approximately equal to the ring gear speed 720.

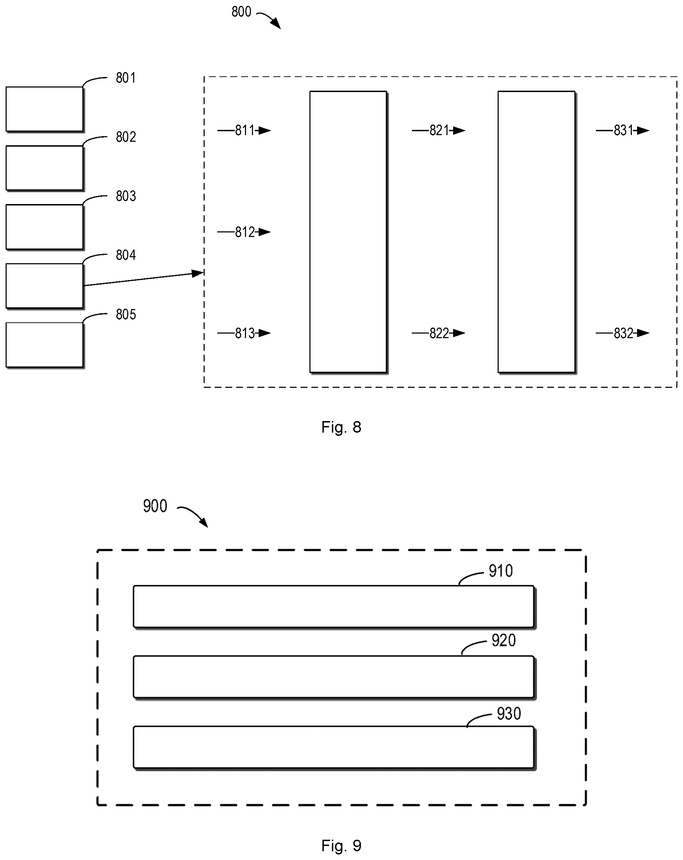

Fig. 8 illustrates an example of an optimization process 800 for speed difference control according to embodiments of the present disclosure. As shown in fig. 8, the gear shifting process may comprise five sub-processes. That is, torque reduction 801, gear disengagement 802, speed synchronization 803, gear shifting 804, and torque increase 805. The speed difference control according to embodiments of the present disclosure may provide improved countermeasures for gear shifting degradation scenarios where the speed difference may not meet the gear shifting requirements when shifting gears 804.

The in-vehicle multi-source sensor system comprises a plurality of sensors that can sense various indicators related to the driving environment and driving characteristics during the driving process. According to embodiments of the present disclosure, the speed of the bushing and the speed of the ring gear may be sensed by a speed sensor to form speed sensing data (i.e., the bushing speed 811 and the ring gear speed 812 shown in fig. 8), and the position of the shift fork may be sensed by a shift fork position sensor to form shift fork position sensing data (i.e., the shift fork position 813 shown in fig. 8).

If, based on the speed sensing data and the shift fork position sensing data, it is determined that the speed difference between the bushing and the ring gear does not satisfy the gear shifting requirements, a gear shifting degradation scenario is identified. According to embodiments of the present disclosure, in response to determining that a gear shifting degradation scenario has occurred, a speed reversal command 821 and a bushing speed request 822 may be generated for the bushing. The speed reversal command 821 may indicate that the main drive motor needs to be instructed to control the speed of the bushing, for example, such that the speed difference between the bushing and the ring gear is reversed. For example, the speed of the bushing may be brought to a target speed by sending a command or request to the main drive motor to control the speed of the main drive motor. The bushing speed request 822 may indicate the target speed to which the speed of the bushing is expected to be lowered. A motor speed control mode request 831 (also referred to herein as the first request) to enable the motor speed control mode and a motor speed request 832 (also referred to herein as the second request) to indicate the motor speed may then be generated based on the speed reversal command 821 and the bushing speed request 822. The speed of the main drive motor may be controlled in the motor speed control mode requested by the motor speed control mode request 831. Further, the speed of the main drive motor may be controlled to a desired motor speed indicated by the motor speed request 832.

According to embodiments of the present disclosure, a controller (e.g., a TCU) may directly acquire the above sensor data or signals (e.g., speed sensing data of the ring gear and the bushing and shift fork position sensing data) and determine whether a gear shifting degradation scenario has occurred in which the speed difference between the bushing and the ring gear does not satisfy the gear shifting requirements based on these sensor data or signals.

Fig. 9 shows a schematic diagram of an apparatus 900 for shifting gears in a vehicle according to embodiments of the present disclosure. The apparatus 900 may comprise multiple units or modules for performing the corresponding steps in the method 200 as discussed in fig. 2. As shown in fig. 9, the apparatus 900 comprises:
a target gear shifting scenario determination module 910 configured to determine whether a target gear shifting scenario associated with the speed difference between the bushing and the ring gear has occurred based on the speeds of the vehicle's ring gear and bushing and the position of the shift fork; a motor control module 920 configured to, in response to determining that a target gear shifting scenario has occurred, instruct the main drive motor to control the speed of the bushing so that the speed difference reaches a predetermined value; and a shift fork monitoring module 930 further configured to stop the bushing-based speed difference control based on the position change of the shift fork after the speed difference reaches the predetermined value.

In some embodiments, the target gear shifting scenario comprises a gear shifting degradation scenario where the speed difference does not meet the gear shifting requirements, and determining the occurrence of the gear shifting degradation scenario may comprise determining that the following conditions are simultaneously met and maintained for a predetermined period of time: the speed difference is less than a speed threshold; the position of the shift fork is within a distance threshold range; and the rate of change of the shift fork position is less than a rate of change threshold.

In some embodiments, the motor control module 920 may be further configured to: transmit a first request to the main drive motor to enable the motor speed control mode by a transmission control unit TCU; and transmit a second request to the main drive motor to indicate a motor speed by the TCU to lower the speed of the bushing to a target speed that is lower than the speed of the ring gear by causing the main drive motor to reach the motor speed in the motor speed control mode.

In some embodiments, the speed difference may be a first speed difference between the bushing and the ring gear when shifting gears, and the predetermined value of the first speed difference may be the opposite of a second speed difference between the bushing and the ring gear before shifting gears.

In some embodiments, the shift fork monitoring module 930 may be further configured to: determine whether the position of the shift fork is greater than a distance threshold; and in response to determining that the distance is greater than the distance threshold, exit speed difference control, transmit a third request to the main drive motor to enable the motor torque operating mode by the TCU, and transmit a fourth request to the main drive motor to request zero torque by the TCU.

In some examples, the apparatus 900 may further comprise: a bushing indication unit configured to generate a speed reversal command and a bushing speed request for the bushing in response to determining that the target gear shifting scenario has occurred; and a motor indication unit configured to generate a first request for enabling the motor speed control mode and a second request for indicating the motor speed for the main drive motor based on the reversal command and the bushing speed request.

In some embodiments: The speed of the bushing and the speed of the ring gear may be sensed by a speed sensor to form speed sensing data and the position of the shift fork may be sensed by a shift fork position sensor to form shift fork position sensing data, wherein: the speed sensing data and the shift fork position sensing data may be acquired by a TCU.

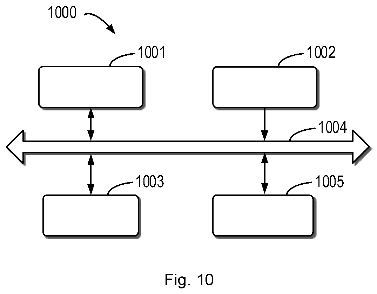

Fig. 10 illustrates a schematic block diagram of an example controller 1000 suitable for implementing embodiments of the present disclosure. The controller described above may be implemented by using the controller 1000. As shown, the controller 1000 comprises a processor 1001, which may perform various appropriate actions and processing by loading computer program instructions stored in a read-only memory (ROM) 1002 into a random access memory (RAM) 1003. Various programs and data required for the operation of the controller 1000 may also be stored in the RAM 1003. The processors 1001, ROM 1002, and RAM 1003 are connected to each other via a bus 1004. An input/output (I/O) interface 1005 is also connected to the bus 1004.

The various processes and processing described above, such as the method 200 and the above processes, may be executed by the processor 1001. For example, in some embodiments, the method 200 and the above processes can be implemented as a computer software program tangibly contained in a machine-readable medium. In some embodiments, portions or all of the computer program can be loaded and/or installed onto the controller 1000 via the ROM 1002. When the computer program is loaded into RAM 1003 and executed by the processor 1001, one or more actions of the method 200 described above and the above processes can be performed. According to embodiments of the present disclosure, a vehicle is provided that may comprise the controller 1000 as described above for performing various aspects of the present disclosure.

The present disclosure may be a method, an apparatus, an electronic device, a vehicle, a computer-readable storage medium, and/or a computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: a portable a computer disk, a hard disk, a random access memory (RAM), a read-only memory (ROM), an erasable programmable read-only memory (EPROM or flash), a static random access memory (SRAM), a portable compact disc read-only memory (CD-ROM), a digital versatile disc (DVD), a memory stick, a floppy disk, a mechanical coder, such as a punch card with instructions or structures with protrusions in grooves or indentations, as well as any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. Where a remote computer is involved, the remote computer may be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, apparatus (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers or the processing units of other programmable data processing devices, thereby producing a type of machine, such that when these instructions are executed by the computers or processing units of other programmable data processing devices, an apparatus that realizes the functions/actions stipulated in one or more boxes in the flow charts and/or block diagrams is produced. These computer-readable program instructions may also be stored in computer-readable storage medium, enabling computers, programmable data processing devices, and/or other devices to operate in a specific manner. Therefore, the computer-readable media containing instructions comprise a manufactured product that includes instructions for implementing various aspects of the functions/actions specified in one or more boxes in the flow charts and/or block diagrams.

The computer-readable program instructions may also be loaded onto a computer, other programmable data processing devices, or other devices, enabling a series of operational steps to be executed on the computer, other programmable data processing devices, or other devices to generate a computer-implemented process. This enables the instructions executed on the computer, other programmable data processing devices, or other devices to implement the functions/actions specified in one or more boxes in the flow charts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner, and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in this text aims to best explain the principles and actual application of the various examples, the technological improvements in the technology in the market, or allow others of ordinary skill in the art to understand the various embodiments disclosed in this text.

## Claims

1. A method (200) for shifting gears in a vehicle, comprising:
determining (210) whether a target gear shifting scenario associated with the speed difference between the bushing and the ring gear has occurred based on the speeds of the vehicle's ring gear and bushing and the position of the shift fork;
in response to determining that a target gear shifting scenario has occurred, instructing (220) the main drive motor to control the speed of the bushing so that the speed difference reaches a predetermined value; and
stopping (230) the bushing-based speed difference control based on the position change of the shift fork after the speed difference reaches the predetermined value.

2. The method according to claim 1, wherein the target gear shifting scenario comprises a gear shifting degradation scenario where the speed difference does not meet the gear shifting requirements, and determining the occurrence of the target gear shifting scenario comprises determining that the following conditions are simultaneously met and maintained for a predetermined period of time:
the speed difference is less than a speed threshold;
the position of the shift fork is within a distance threshold range; and
the rate of change of the shift fork position is less than a rate of change threshold.

3. The method according to claim 1, wherein instructing the main drive motor to control the speed of the bushing comprises:
transmitting a first request to the main drive motor to enable the motor speed control mode by a transmission control unit TCU; and
transmitting a second request to the main drive motor to indicate a motor speed by the TCU to lower the speed of the bushing to a target speed that is lower than the speed of the ring gear by causing the main drive motor to reach the motor speed in the motor speed control mode.

4. The method according to claim 3, wherein the speed difference is a first speed difference between the bushing and the ring gear during gear shifting, and
the predetermined value of the first speed difference is the opposite of a second speed difference between the bushing and the ring gear before shifting gears.

5. The method (200) according to claim 1, wherein stopping the bushing-based speed difference control comprises:
determining whether the position of the shift fork is greater than a distance threshold; and
in response to determining that the distance is greater than the distance threshold, exiting speed difference control, transmitting a third request to the main drive motor to enable the motor torque operating mode by the TCU, and transmitting a fourth request to the main drive motor to request zero torque by the TCU.

6. The method (200) according to claim 1, further comprising:
generating a speed reversal command and a bushing speed request for the bushing in response to determining that the target gear shifting scenario has occurred; and
generating a first request for enabling the motor speed control mode and a second request for indicating the motor speed for the main drive motor based on the reversal command and the bushing speed request.

7. The method (200) according to claim 1, wherein:
the speed of the bushing and the speed of the ring gear are sensed by a speed sensor to form rotational speed sensing data and
the position of the shift fork is sensed by a shift fork position sensor to form shift fork position sensing data, wherein:
the speed sensing data and the shift fork position sensing data are acquired by a TCU.

8. An apparatus for shifting gears in a vehicle, comprising:
a target gear shifting scenario determination module, configured to determine whether a target gear shifting scenario associated with the speed difference between the bushing and the ring gear has occurred based on the speeds of the vehicle's ring gear and bushing and the position of the shift fork;
a motor indication module configured to, in response to determining that the target gear shifting scenario has occurred, instruct the main drive motor to control the speed of the bushing so that the speed difference reaches a predetermined value; and
a shift fork monitoring module further configured to stop the bushing-based speed difference control based on the position change of the shift fork after the speed difference reaches the predetermined value.

9. A controller, comprising: at least one processor, and
a memory, coupled to the at least one processor, and
having instructions stored thereon that, when executed by the at least one processor, cause the controller to perform the method according to any one of claims 1-7.

10. A vehicle, comprising the controller according to claim 9.

11. A computer program product, the computer program product being tangibly stored on a computer-readable medium and comprising computer-executable instructions that, when executed by a processor of a computer, cause the computer to perform the method according to any one of claims 1 to 7.
